# EUROPEAN PATENT APPLICATION

(11) **EP 4 652 829 A1**
(43) Date of publication of application: **26.11.2025**
(21) Application number: 25174768.9
(22) Date of filing: 07.05.2025
(51) Int. Cl.: A01D 41/127

(54) **A CONTROL ARRANGEMENT FOR A COMBINE HARVESTER**

(30) Priority: 21.05.2024 US 202463649982 P
(71) Applicant: Agco Corporation, Duluth, Georgia 30096 (US)
(72) Inventor: Schrag, Steve John, Hesston (US)
(74) Representative: AGCO Intellectual Property Department

(57) **Abstract**

A mechanism for controlling crop processing arrangements of a combine harvester. One or more flow rate measures are produced for a crop processing arrangement, which are processed to identify whether the flow rate of crop through the crop processing arrangement has been affected. If the flow rate has been affected, any upstream crop processing arrangements are slowed or stopped and any downstream crop processing arrangements are slowed or maintained (without reducing to zero).

## Description

### FIELD

Embodiments of the present disclosure relate generally to combine harvesters, and in particular to the control of components of a combine harvester.

### BACKGROUND

A combine harvester typically includes a plurality of crop processing arrangements that are configured to process crop sequentially, i.e., in turn, to produce a crop flow through the combine harvester. In other words, the output of one crop processing arrangement passes to another crop processing arrangement for further processing, such that crop flows through the crop processing arrangements. The crop processing arrangements can therefore be considered to be upstream or downstream, with respect to crop flow, of one another.

The plurality of crop processing arrangements typically comprises a header (i.e., a crop cutting arrangement), a feeder (for transporting cut crop away from the header), a beater or threshing system for threshing or beating crop transported thereto by the feeder, a separator system downstream of the beater or threshing system and a discharger system for extracting and discharging material-other-than-grain (MOG). Of course, the plurality of crop processing arrangements may comprise further arrangements, e.g., a grain transporter for transporting grain from the separator system to a hopper.

There are various designs for the various crop processing arrangements (e.g. axial or transverse). However, in all designs, there is a flow of crop or material between the crop processing arrangements.

The header is typically in the form of a wide array of cutters and a delivery auger (or belt) to feed the cut material to the feeder. The feeder is typically in the form of a conveyor chain with cross bars that transport the crop (material).

The threshing system typically comprises threshing rotors that rotate with respect to concave gratings (known simply as "concaves"). As mentioned above, the threshing rotors may be arranged transversally or longitudinally with respect to the direction of travel of the combine harvester.

The most traditional threshing systems is the transverse threshing system, commonly called "conventional" threshing, where the rotor combined with its static concave is placed transversally to the machine, receiving all the crop or material coming from the feeder in a perpendicular flow. This allows the material to be processed without the need for a change in direction.

The separator system may comprise, for instance, a set of one or more axial screws, e.g. a plurality of axial screws, that is/are rotated by a motor arrangement. Each axial screw may comprise a set of one or more holes or sieves sized to permit the passage of grain, but not larger material which can be passed to the discharger system for discharging from the combine harvester.

### BRIEF SUMMARY

According to examples in accordance with this disclosure, there is provided a control system for a combine harvester comprising a plurality of crop processing arrangements configured to sequentially process crop to define a crop flow through the combine harvester.

The control system is configured to, for each crop processing arrangement in a subset of the plurality of crop processing arrangements: receive at least one flow rate measure responsive to a maximum flow rate of crop through the crop processing arrangement for current operating parameters of the crop processing arrangement; predict whether or not the crop processing arrangement is a flow-affected crop processing arrangement, being a crop processing arrangement in which the maximum flow rate of crop therethrough has reduced or has become negligible, by processing the at least one flow rate measure; and responsive to predicting that the crop processing arrangement is a flow-affected crop processing arrangement: reduce a maximum flow rate through each, if any, upstream crop processing arrangement, being any crop processing arrangement that is upstream, with respect to the crop flow, of the flow-affected crop processing arrangement; and control a maximum flow rate through each, if any, downstream crop processing arrangement to be greater than the maximum flow rate through each, if any, any upstream crop processing arrangement, wherein each downstream crop processing arrangement is any crop processing arrangement that is downstream, with respect to the crop flow, of the flow-affected crop processing arrangement.

The present disclosure proposes to identify a slowing or stopping of a crop flow through a particular crop processing arrangement and control an operation of upstream and downstream crop processing arrangements responsive to the identified slowing or stopping of the crop flow.

In particular, it is proposed to slow or stop a crop flow through any upstream crop processing arrangements, which reduces a risk and/or amount of crop build up and/or blockage in the identified crop processing arrangement. It is also proposed to maintain at least some crop flow through downstream crop processing arrangements to aid in the removal or transporting of crop away from the slowed/stopped crop processing arrangement. This further reduces a risk and/or amount of crop build up and/or blockage at the slowed/stopped crop processing arrangement.

In the context of the present disclosure, a maximum flow rate is considered to be a flow rate that would be achieved, for the relevant crop processing arrangement operating with certain/current operating parameters, assuming that any upstream crop processing arrangements provide an optimal amount of crop (material) for processing.

The maximum flow rate will be influenced, for instance, by a maximum (possible) speed of processing the crop processing arrangement for the current parameters.

Preferably, for each crop processing arrangement, the flow rate measure is measured independently of the operating parameter(s) for the crop processing arrangement. This does not exclude the possibility that the flow rate measure may be used to provide feedback for controlling the operation of said crop processing arrangement.

In some examples, for each crop processing arrangement in the subset, each flow rate measure is a measure of an operational speed or rate of a component of the crop processing arrangement.

In some examples, each crop processing arrangement in the subset comprises at least one rotatable element configured to rotate during processing of crop by the crop processing arrangement; and for each crop processing arrangement in the subset, each flow rate measure is a measure of a rotation speed of a respective rotatable element of the crop processing arrangement.

The rotation speed of a rotatable element of a crop processing arrangement will indicate whether or not there is a blockage in the crop processing arrangement and/or a break or fault in the crop processing arrangement.

In some examples, the control system is configured to, for each crop processing arrangement in the subset, predict whether or not the crop processing arrangement is a flow-affected crop processing arrangement by processing the at least one flow rate measure to predict whether or not the maximum flow rate of crop through the crop processing arrangement has become negligible.

In some examples, the control system is configured to, for each crop processing arrangement in the subset, responsive to predicting that the crop processing arrangement is a flow-affected crop processing arrangement, stop an operation of each, if any, upstream crop processing arrangement.

Stopping upstream crop processing arrangements significantly reduces a risk and/or amount of crop (material) blocking or formed in the flow-affected crop processing arrangement.

In some examples, the control system is configured to, for each crop processing arrangement in the subset and responsive to predicting that the crop processing arrangement is a flow-affected crop processing arrangement, maintain a maximum flow rate through each, if any, downstream crop processing arrangement.

In some examples, the control system is configured to, for each crop processing arrangement in the subset and responsive to predicting that the crop processing arrangement is a flow-affected crop processing arrangement: for each, if any, downstream crop processing arrangement, stopping the operation of said downstream crop processing arrangement after a predetermined and non-zero period of time has elapsed.

This approach recognizes that, in practice, a flow-affected crop processing arrangement may require user and/or manual intervention to fix or address. By stopping the operation of downstream crop processing arrangements after a period of time has elapsed, this provides the opportunity for the transportation of crop (material) away from the flow-affected crop processing arrangement before stopping the downstream crop processing arrangement for improved safety when fixing or addressing the flow-affected crop processing arrangement.

In some examples, the control system is configured to, for each crop processing arrangement in the subset and responsive to predicting that the crop processing arrangement is a flow-affected crop processing arrangement, reduce a travel speed of the combine harvester.

This approach reduces a risk and/or amount of non-harvested crop that is flattened or otherwise adversely affected by the combine harvester (e.g., as the crop will not be cut due to the reduced or stopped flow rate of a cutting crop processing arrangement).

In some examples, the control system is configured to, for each crop processing arrangement and responsive to predicting that the crop processing arrangement is a flow-affected crop processing arrangement, stop a travel of the combine harvester.

In some examples, for each crop processing arrangement in the subset, the control system is configured to predict whether or not the crop processing arrangement is a flow-affected crop processing arrangement by comparing one or more flow rate measures for the crop processing arrangement to a respective set of one or more thresholds.

In some examples, for each crop processing arrangement, each threshold is defined responsive to a respective expected flow rate measure for the crop processing arrangement.

In some examples, for each crop processing arrangement in the subset, the control system is configured to predict whether or not the crop processing arrangement is a flow-affected crop processing arrangement by performing a process that comprises identifying whether or not there are any step changes in each flow rate measure.

In some examples: at least one crop processing arrangement in the subset is a parallel processing arrangement that comprises a plurality of crop processing elements configured to process crop in parallel to one another; and for each parallel processing arrangement, the at least one flow rate measure comprises, for each crop processing element, an element flow rate measure responsive to a maximum flow rate of crop through the crop processing element for current operating parameters of the crop processing element.

In some examples, for each parallel processing arrangement, the control system is configured to predict whether or not the crop processing arrangement is a flow-affected crop processing arrangement by performing a process that comprises comparing each element flow rate measure to one another.

In some examples, for each parallel processing arrangement, the control system is configured to, for each crop processing element: predict whether or not the maximum flow rate of crop through the crop processing element has reduced or has become negligible by processing the element flow rate measure; and responsive to predicting that the flow of crop through the crop processing element has reduced or has become negligible, maintain or reduce a maximum flow rate through each other crop processing element of the parallel processing arrangement to a non-zero maximum flow rate.

Reducing a maximum flow rate through each other crop processing element of the parallel processing arrangement reduces a risk of damaging any crop processing element in the parallel processing arrangement.

There is also proposed a computer-implemented method for a combine harvester comprising a plurality of crop processing arrangements configured to sequentially process crop to define a crop flow through the combine harvester.

The computer-implemented method comprises, for each crop processing arrangement in a subset of the plurality of crop processing arrangements: receiving at least one flow rate measure responsive to a maximum flow rate of crop through the crop processing arrangement for current operating parameters of the crop processing arrangement; predicting whether or not the crop processing arrangement is a flow-affected crop processing arrangement, being a crop processing arrangement in which the maximum flow rate of crop therethrough has reduced or has become negligible, by processing the at least one flow rate measure; and responsive to predicting that the crop processing arrangement is a flow-affected crop processing arrangement: reducing a maximum flow rate through each, if any, upstream crop processing arrangement, being any crop processing arrangement that is upstream, with respect to the crop flow, of the flow-affected crop processing arrangement; and controlling a maximum flow rate through each, if any, downstream crop processing arrangement to be greater than the maximum flow rate through each, if any, any upstream crop processing arrangement, wherein each downstream crop processing arrangement is any crop processing arrangement that is downstream, with respect to the crop flow, of the flow-affected crop processing arrangement.

The computer-implemented method may be modified to perform the functions of any herein disclosed control system. Similarly, any herein disclosed control system may be modified to perform the steps of any herein disclosed method.

There is also provided computer program product comprising computer program code means which, when executed on a control system, cause the control system to perform all of the steps of any herein disclosed method.

### BRIEF DESCRIPTION OF THE DRAWINGS

One or more embodiments of the invention / disclosure will now be described, by way of example only, with reference to the accompanying drawings, in which:
FIG. 1 illustrates a combine harvester;
FIG. 2 illustrates a portion of the combine harvester;
FIG. 3 illustrates a proposed method;
FIG. 4 illustrates a portion of a variant to the combine harvester;
FIG. 5 illustrates a proposed control system; and
FIG. 6 also illustrates the proposed control system.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a mechanism for controlling crop processing arrangements of a combine harvester. One or more flow rate measures are produced for a crop processing arrangement, which are processed to identify whether the flow rate of crop through the crop processing arrangement has been affected. If the flow rate has been affected, any upstream crop processing arrangements are slowed or stopped and any downstream crop processing arrangements are slowed or maintained (without reducing to zero).

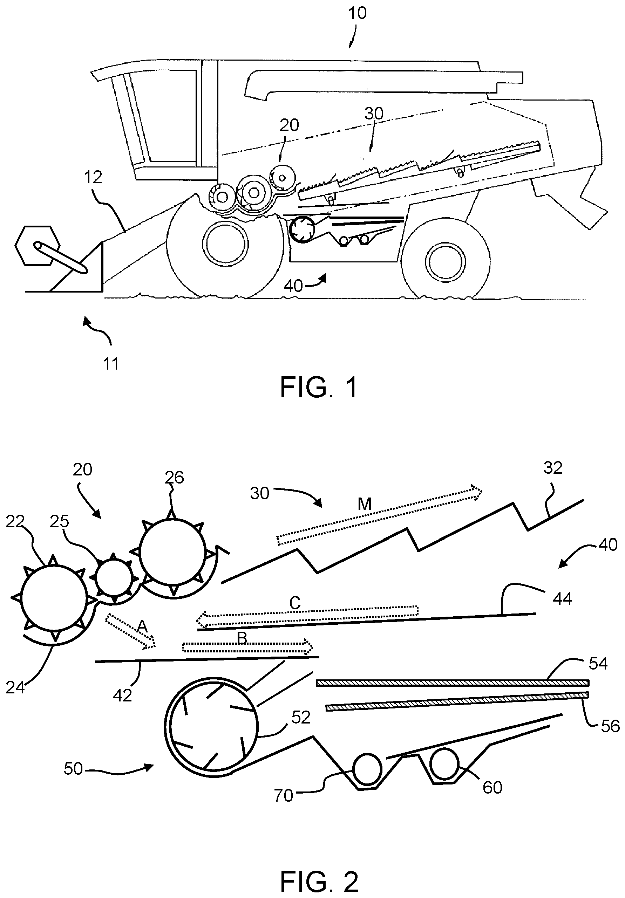

FIG. 1 shows a known combine harvester 10 to which herein proposed approaches may be applied.

The combine harvester 10 comprises a plurality of crop processing arrangements. The crop processing arrangement sequentially or consecutively process crop (material), to thereby produce a crop flow through the combine harvester. The crop processing arrangements can therefore be considered to be upstream or downstream, with respect to crop flow, of one another.

In the illustrated example, the plurality of crop processing arrangements typically comprises a header 11, a feeder 12, a beater or threshing system 20, a separator system 30, and a grain cleaning apparatus 40. Each of these is itself an example of a crop processing arrangement, or of a larger crop processing system that comprises its own plurality of crop processing arrangements.

Of course, although not necessarily visible in FIG. 1, the plurality of crop processing arrangements may comprise further arrangements, e.g., a discharger system, a grain transporter for transporting grain from the separator system to a hopper and so on.

The header 11 (also known as the crop cutting head) for example comprises a wide laterally extending transverse auger, which cuts the crop (material) and drives it inwardly towards a central area.

The feeder 12 is here embodied as a front elevator housing that receives the cut crop (material) and includes a feederhouse for transporting the crop (material).

The feeder 12 delivers the crop (material) to a threshing system 20 for detaching grains of cereal from the ears of cereal. In this way, the threshing system 20 is downstream of the feeder 12. The threshing system comprises one or more threshing units, in particular rotors, and associated concaves.

In the example shown, the threshing system 20 is a tangential-flow 'conventional' threshing system, i.e. formed by rotating elements with an axis of rotation in the side-to-side direction of the combine harvester and for generating a tangential flow. For example, the 'conventional' threshing system includes a rotating, tangential-flow, threshing cylinder and a concave-shaped grate. The threshing cylinder includes rasp bars (not shown) which act upon the crop stream to thresh the grain or seeds from the remaining material, the majority of the threshed grain passing through the underlying grate and onto a stratification pan (also sometimes known as the grain pan).

There are also axial threshing systems, i.e. formed by rotating elements with an axis of rotation in the longitudinal direction (direction of travel). For example, the threshing section may have axially-aligned rasp bars spaced around the front section whilst the separating section has separating elements or fingers arranged in a pattern, e.g. a spiral pattern, extending from the rasp bars to the rear of the rotor.

An example of an axial threshing is later described and illustrated.

A separator system 30 is connected downstream of the threshing system 20, so as to receive crop (material) that has been processed by the threshing system. In the example shown, the separator system 30 includes one or more parallel, longitudinally-aligned, straw walkers 32, and this is suitable for the case of a so-called straw-walker combine. The grains after separation by the separator system 30 pass to a grain cleaning apparatus 40.

FIG. 2 illustrates a portion of the combine harvester in more detail.

The illustrated threshing system 20 comprises a series of axial rotors 22, 25, 26 beneath which is mounted the concave 24. Each axial rotor may, for instance, represent an example of a crop processing arrangement, as they are located at different position in the crop flow through the combine.

The concave may have different sections along its length, and the first section 24 to receive the crop (material) (to the left in FIG. 2) may have a releasable concave, or else the whole length of the concave may be releasable. The separating function involves conveying the crop stream rearwardly in a ribbon passing along a spiral path.

Transverse (conventional) threshing may also be combined with axial separation (as later illustrated).

The initial threshing by the threshing system 20 may create a first flow A of crop material (e.g., grain) through the concave 24 to a stratification pan 42 of the grain cleaning system 40. The separation system 30, which is also downstream of the threshing system 20, receives a second flow M of crop material and separates further grain from the second flow. The grain separated by the separation system passes through a grate-like structure onto an underlying return pan 44. The residue crop (material), predominantly made up of straw, exits the machine at the rear. Although not shown in FIG. 1 or 2, a discharger system (such as a straw spreader and/or chopper) may be provided to process and discharge the crop (material).

The threshing apparatus 20 does not remove all material other than grain, "MOG", from the grain so that the crop material collected by the stratification pan 42 and return pan 44 typically includes a proportion of straw, chaff, tailings and other unwanted material such as weed seeds, bugs, and tree twigs. The remainder of the grain cleaning apparatus 40 is in the form of a grain cleaning unit 50. The grain cleaning unit 50 removes this unwanted material thus leaving a clean sample of grain to be delivered to the tank.

The grain cleaning unit 50 comprises a fan unit 52 and sieves 54 and 56. The upper sieve 54 is known as the chaffer.

The stratification pan 42 and return pan 44 are driven in an oscillating manner to convey the grain and MOG accordingly. Although the drive and mounting mechanisms for the stratification pan 42 and return pan 44 are not shown, it should be appreciated that this aspect is well known in the art of combine harvesters and is not critical to disclosure of the invention. Furthermore, it should be appreciated that the two pans 42, 44 may take a ridged construction as is known in the art.

The general flow of material is as follows. The grain passing through the concave 24 falls onto the front of stratification pan 42 as indicated by arrow A in FIG. 2. This material is conveyed rearwardly (in the direction of arrow B in FIG. 2) by the oscillating motion of the stratification pan 42 and the ridged construction thereof. Material passing through the concave further back falls onto the return pan 44 and is conveyed forwardly by the oscillating motion and ridged construction thereof as shown by arrow C.

It is noted that "forwardly" and "rearwardly" when describing the flow of crop (material) refer to direction relative to the normal forward direction of travel of the combine harvester.

When the material reaches a front edge of the return pan 44 it falls onto the stratification pan 42 and is conveyed as indicated by arrow B.

The combined crop streams thus progress rearwardly towards a rear edge of the stratification pan 42. Whilst conveyed across the stratification pan 42, the crop stream, including grain and MOG, undergoes stratification wherein the heavier grain sinks to the bottom layers adjacent stratification pan 42 and the lighter and/or larger MOG rises to the top layers.

Upon reaching the rear edge of the stratification pan 42, the crop stream falls onto the chaffer 54 which is also driven in a fore-and-aft oscillating motion. The chaffer 54 is of a known construction and includes a series of transverse ribs or louvers which create open channels or gaps therebetween. The chaffer ribs are angled upwardly and rearwardly so as to encourage MOG rearwardly whilst allowing the heavier grain to pass through the chaffer onto an underlying second sieve 56.

The chaffer 54 is coarser (with larger holes) than second sieve 56. Grain passing through chaffer 54 is incident on the lower sieve 56 which is also driven in an oscillating manner and serves to remove tailings from the stream of grain before being conveyed to on-board tank (not shown) by grain collecting auger 70 which resides in a transverse trough 70 at the bottom of the grain cleaning unit 50. Tailings blocked by sieve 56 are conveyed rearwardly by the oscillating motion thereof to a rear edge from where the tailings are directed to the returns auger 60 for reprocessing in a known manner.

Each previously identified element of the combine harvester that (e.g., actively) processes or receives crop material (e.g., the crop, grain, MOG, tailing, straw etc.) is considered to be an example of a crop processing arrangement within the context of the present disclosure. Thus, a crop processing arrangement may be: a threshing system 20; a rotor 22, 25, 26 of the threshing system; the separator system 30; the straw walker(s) 32; the grain cleaning system 40; the stratification pan 42; the return pan 44; the grain cleaning unit 50; the fan unit 52; the sieves 54, 56; the returns augur 60; and the grain collecting augur 70. Other examples will be apparent to the skilled person.

From the foregoing, it will be apparent that each crop processing arrangement can therefore be considered to be upstream (with respect to a flow/steam of crop material) or downstream from each other crop processing arrangement. For instance, the separation system 30 is considered to be downstream from the threshing system 20, just as the threshing system 20 is considered to be upstream from the separation system 30.

It is herein recognized that the slowing or failure of any of the crop processing arrangements can cause a build-up of material or crop at the slowed/failed crop processing arrangement. In particular, if a flow rate at a particular crop processing arrangement slows or stops, then other crop processing arrangements upstream of this crop processing arrangements may continue to feed the crop processing arrangement with material. This can result in a "plug" or blockage of material forming in the slowed/failed crop processing arrangement.

The present disclosure proposes to at least partially overcome this problem by, for any failed/slowed crop processing arrangements, slowing or stopping a flow rate through any upstream crop processing arrangements upstream and maintaining or defining a flow rate through each downstream crop processing arrangement to be greater than the flow rate through each upstream crop processing arrangement

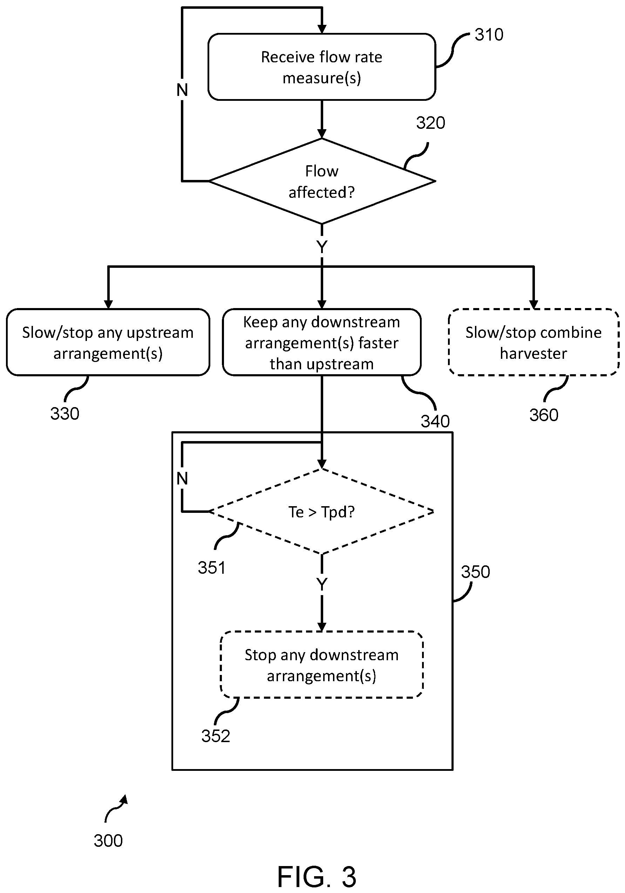

FIG. 3 illustrates a proposed method 300, which may be performed by a herein proposed control system. The method is designed for controlling an operation of a combine harvester that comprises a plurality of crop processing arrangements that are configured to sequentially process crop to define a crop flow through the combine harvester.

The method 300 is performed for each of a subset of the plurality of crop processing arrangements. In the context of the present disclosure, the subset of the plurality of crop processing arrangement includes one or more of the plurality of crop processing arrangements, and may include all of the plurality of crop processing arrangements.

The method 300 comprises a step 310 of receiving at least one flow rate measure. The flow rate measure is responsive to a maximum flow rate of crop through the crop processing arrangement for current operating parameters of the crop processing arrangement.

The flow rate measure(s) may be obtained from a sensor and/or memory/buffer connected to the sensor. Thus, the control system may, in some examples, comprise one or more sensors, for each crop processing arrangement, configured to generate or measure the flow rate measure(s).

Preferably, for each crop processing arrangement, the flow rate measure is measured independently of the operating parameter(s) for the crop processing arrangement, i.e., is not a value of any operating parameter(s) used for controlling the crop processing arrangement. This does not exclude the possibility that the flow rate measure may be used to provide feedback for controlling the operation of said crop processing arrangement by a (different) control system.

One example of a flow rate measure is a measure of an operational speed or rate of a component of the crop processing arrangement. In particular, it is recognized that the speed or rate of components of a crop processing arrangement will change responsive to a maximum flow rate of the crop through the arrangement. For instance, a speed of a drive belt is responsive to a flow rate of crop. As another example, in a threshing system, a distance between a threshing rotor and a concave may change for different flow rates. As yet another example, a speed of a rotatable element of a crop processing arrangement will increase for increased flow rate, and reduce for a reduced flow rate.

Accordingly, in some specific examples, the crop processing arrangement comprises at least one rotatable element configured to rotate during processing of crop by the crop processing arrangement. Correspondingly, each flow rate measure may be a measure of a rotation speed of a respective rotatable element of the crop processing arrangement.

Examples of rotatable elements within a crop processing arrangement of a combine harvester are well known to the skilled person. A non-exhaustive list of possible rotatable elements includes: a shaft of a motor in the crop processing arrangement; a driveshaft driven by a motor of the crop processing arrangement; a threshing rotor in a threshing system; an augur driving system in a header or feeder; an axial screw in a separator system and so on.

Other examples of suitable flow rate measures will be apparent to the skilled person. For instance, a flow rate measure may be generated using image analysis of a crop processing arrangement captured by a camera.

The method 300 also comprises a step 320 of predicting whether or not the crop processing arrangement is a flow-affected crop processing arrangement, by processing the at least one flow rate measure. In this context, a crop processing arrangement is a flow-affected crop processing arrangement if the flow of crop therethrough has reduced or has become negligible.

Various approaches to performing step 320 are proposed.

In some approaches, step 320 comprises comparing each at least one flow rate measure to a respective set of one of more thresholds. The crop processing arrangement may be determined to be a flow-affected crop processing arrangement if a flow rate measure breaches a threshold in the respective set. In other words, the crop processing arrangement is determined to be a flow-affected crop processing arrangement if the crop processing arrangement (for current operating parameters of the crop processing arrangement) has slowed its crop processing speed or has stopped.

In particular, a flow rate measure may breach a threshold if it falls below a first predetermined threshold (in the respective set) and/or rises above a second predetermined threshold (in the respective set). The precise approach(es) employed will, of course, depend upon the nature of the flow rate measure and/or the thresholds.

For instance, if the flow rate measure is a measure of rotation speed or a rotatable element in the crop processing arrangement, then a rotation speed below a first predetermined threshold may indicate that the rotatable element has failed or is over-burdened such that the maximum flow rate through the crop processing arrangement has reduced or has become negligible. A rotation speed above a second predetermined threshold may indicate that a coupling between the rotation element and another component has failed (e.g., such that the load on a motor rotating the rotatable element significantly changes), which would also indicate that the maximum flow rate through the crop processing arrangement has reduced or has become negligible. The skilled person will appreciate how this understanding applies to other forms of flow rate measure.

The threshold(s) for each flow rate measure may be defined based on an (predefined) expected value for the flow rate measure for the current operating parameters of the crop processing arrangement. For instance, current operating parameters for the crop processing arrangement may define or be mapped to an expected value for the flow rate measure. As an example, a rotation speed for a rotatable element of the crop processing arrangement may have an expected value for particular current operating parameters. Each threshold may be set at a predetermined percentage of the expected value for the flow rate measure, at least to account for natural variation and/or noise.

For each flow rate measure, the expected value for the flow rate measure may be predetermined (e.g., fixed or static) or may be determined using historic/monitored values for the flow rate measure, e.g., a moving average of the flow rate measure.

The expected value for the flow rate measure may be responsive to further values or parameters, outside of the current operating parameters. For instance, external conditions (such as a field condition, weather condition, crop type and/or crop condition). In some examples, the expected value for the flow rate measure is therefore determined or identified using the current operating parameters and one or more external conditions (e.g., using a look-up table, a suitable algorithmic process and/or a suitably trained machine-learning method).

In some approaches, step 320 comprises monitoring each at least one flow rate measure to identify or detect any sudden or step changes in the flow rate measure. For instance, if a value of the flow rate measure changes by more than a predetermined percentage within a predetermined period/window of time, then it can be determined that there has been a sudden or step change in the maximum flow rate through corresponding crop processing arrangement indicative of a slowing or stopping of crop flow through the crop processing arrangement.

Other approaches for predicting whether or not the crop processing arrangement is a flow-affected crop processing arrangement will be apparent to the skilled person. For instance, the flow rate measure(s) may be processed by an appropriately trained machine-learning algorithm to perform the prediction. As another example, the flow rate measures may be compared to one another to perform the prediction. A further example approach for performing step 320 is provided later in this description.

Responsive to a negative determination in step 320 (i.e., it is predicted that the crop processing arrangement is not a flow-affected crop processing arrangement), the method may revert back to step 310 and receive the (next) flow rate measure.

Responsive to a positive determination in step 320 (i.e., it is predicted that the crop processing arrangement is a flow-affected crop processing arrangement), the method may perform step 330 and step 340.

Step 330 comprises reducing a maximum flow rate through each, if any, upstream crop processing arrangement. An upstream crop processing element is any crop processing arrangement that is upstream, with respect to the crop flow, of the flow-affected crop processing arrangement. This approach reduces the amount of material fed to the flow-affected crop processing arrangement, significantly reducing a risk and/or size of a "plug" or blockage of material in the flow-affected crop processing arrangement.

Of course, if the flow-affected crop processing arrangement is the first crop processing arrangement in the plurality of crop processing arrangements, then step 330 is effectively not performed.

Step 330 may, for instance, comprise stopping an operation of each, if any, upstream crop processing arrangement. In other words, step 330 may comprise reducing the maximum flow rate through each (if any) upstream crop processing element to zero or a negligible amount. This approach prevents the upstream crop processing arrangement(s) from continuing to feed the flow-affected crop processing arrangement with material, significantly reducing a risk and/or size of a "plug" or blockage of material in the flow-affected crop processing arrangement.

Step 340 comprises controlling a maximum flow rate through each, if any, downstream crop processing arrangement to be greater than the maximum flow rate through each, if any, any upstream crop processing arrangement. Each downstream crop processing arrangement is any crop processing arrangement that is downstream, with respect to the crop flow, of the flow-affected crop processing arrangement.

In this way, in step 340, the maximum flow rate through each downstream crop processing arrangement is controlled to be non-zero. This helps to disperse crop (material) in the flow-affected crop processing arrangement to actively reduce a risk and/or size a "plug" or blockage of material in the flow-affected crop processing arrangement.

Of course, if the flow-affected crop processing arrangement is the last crop processing arrangement in the plurality of crop processing arrangements, then step 340 is effectively not performed.

Step 340 may, for instance, comprise maintaining an operation of each, if any, downstream crop processing arrangement, e.g., to keep it/them operating in the same manner as before step 320 was performed.

Approaches for performing step 330 and 340 will be readily apparent to the skilled person. In particular, the control system may be configured to control or modify operating parameters of each (if any) upstream and downstream crop processing arrangement in order to control or modify the maximum flow rate of crop therethrough. This may, for instance, comprise controlling a speed of any motors of each (if any) upstream and downstream crop processing element and/or controlling a clutch engagement of each (if any) upstream and downstream crop processing element. Other approaches will be apparent to the skilled person, and may be dependent upon the precise nature of the crop processing arrangement. For instance, if an upstream crop processing arrangement is the header, then a cutting height of the header may be modified to control the maximum crop flow.

Optionally, the method 300 may comprise (after performing step 340) performing a step 350 of stopping the operation of each said downstream crop processing arrangement after a predetermined and non-zero period of time has elapsed. The predetermined period of time may, for instance, differ for each downstream crop processing arrangement. In preferred examples, the predetermined period of time does not reduce with distance along the crop flow, e.g., increases or stays the same.

Thus, step 350 may comprise, after initiating step 340, a sub-step 351 of determining whether or not an elapsed time Te (since step 340 was initiated) exceeds a predetermined (and non-zero) period of time Tpd or duration. Responsive to a negative determination (i.e., the elapsed time does not exceed the predetermined period of time), the method may hang at sub-step 351. Responsive to a positive determination in sub-step 351, i.e., the elapsed time exceeds the predetermined period of time, the method may perform a sub-step 352 of stopping the operation of the downstream crop processing arrangement.

Further optional steps for the method 300 are hereafter described.

In some examples, method 300 comprises, responsive to step 320 predicting that the crop processing arrangement is a flow-affected crop processing arrangement, a step 360 of reducing a travel speed of the combine harvester. In this way, the forward motion of the combine harvester may be reduced. Approaches for performing step 360 will be readily apparent to the skilled person, e.g., controlling the operation of a drive arrangement of the combine harvester or controlling a braking system of the combine harvester. For instance, step 360 may comprise: controlling an engine arrangement of the combine harvester; controlling a clutch engagement between the engine arrangement of the combine harvester and a driveshaft of the combine harvester; and/or controlling an amount of braking applied by a braking system to one or more wheels of the combine harvester. Other approaches will be clear to the skilled person.

This approach reduces a risk and/or amount of non-harvested crop that is flattened or otherwise adversely affected by the combine harvester (e.g., as the crop will not be cut due to the reduced or stopped flow rate of a cutting crop processing arrangement).

In some examples, step 360 comprises stopping a travel of the combine harvester. This significantly reduces a risk and/or amount of non-harvested crop that is flattened or otherwise adversely affected by the combine harvester.

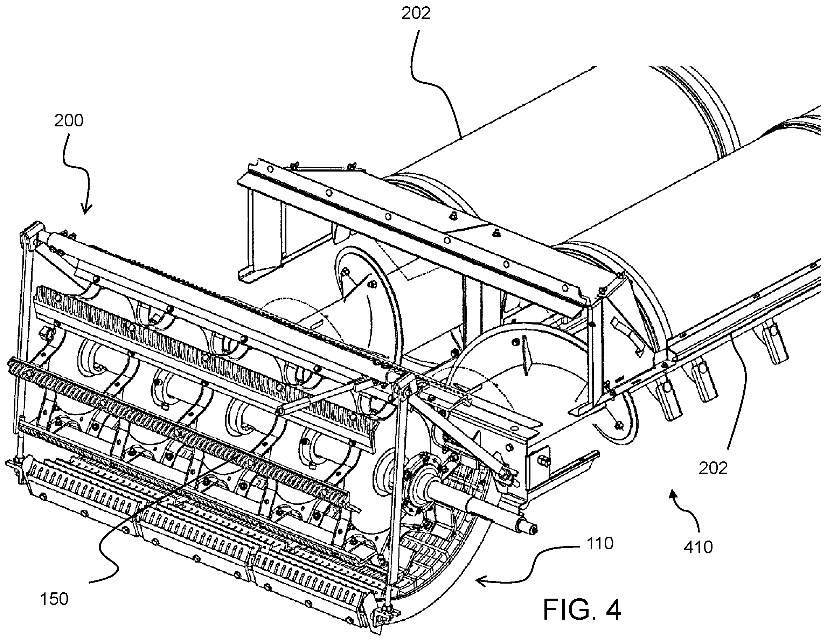

FIG. 4 illustrates a view of a portion of a combine harvester in which proposed embodiments may be employed. The combine harvester here comprises a parallel processing arrangement 410 that comprises a plurality of crop processing elements configured to process crop in parallel to one another.

More particularly, FIG. 4 shows an arrangement of a transverse threshing rotor 150 and concave 110 and an axial separation system 410 comprises two separating augers 202 downstream of the threshing system.

Thus, the parallel processing arrangement 410 is here embodied as a separator system, with two separate axial screws or augurs that are rotated by a motor arrangement (not visible in FIG. 4). Each axial screw is capable of performing a separation function on crop (material) flowing through the parallel processing arrangement. In other words, a crop flow into the separator system will split into two crop sub-flows or streams that flow through a respective crop processing element (here: a respective axial screw).

The skilled person will readily appreciate that other forms of parallel processing arrangements, each comprising a plurality of parallel processing arrangements, are available or producable.

Referring back to FIG. 3, possible variations and example approaches for performing various steps if the crop processing arrangement (for which method 300 is being performed) is a parallel processing arrangement are hereafter described.

In particular, step 310 may comprise receiving, for each parallel processing arrangement an element flow rate measure responsive to a maximum flow rate of crop through the crop processing element for current operating parameters of the crop processing element.

As a working example, if each parallel processing arrangement comprises a respective rotatable element (e.g., an axial screw of a separator system), then each element flow rate measure may be a (measured) rotation speed of a respective rotatable element of the axial screw.

Step 320 may correspondingly comprise predicting whether or not the crop processing arrangement is a flow-affected crop processing arrangement by performing a process that comprises comparing each element flow rate measure to one another.

In particular, step 320 may comprise determining if a difference between each element flow rate measure is greater than a predetermined difference value or has undergone a sudden or step change. This effectively determines if there is a significant difference or change in crop processing speed by any of the crop processing elements (indicative that the crop processing element has failed or is blocked).

In some examples, step 320 may be configured to predict whether or not each crop processing element (in the parallel processing arrangement) is a flow-affected crop processing element. This can be performed, for instance, by processing the respective element flow rate measure(s) in a similar manner to any previously described approach for processing the flow rate measure(s) of a crop processing arrangement.

In particular, step 320 may comprise identifying a crop processing element as a flow-affected crop processing element if the difference between its element flow rate measure and an element flow rate measure of another crop processing element (in the same parallel processing arrangement) is greater than a predetermined difference value or has undergone a sudden or step change and the element flow rate measure indicates a lower flow rate (than in said other crop processing element).

The method 300 may further comprise responsive to predicting that the flow of crop through the crop processing element has reduced or has become negligible, maintain or reduce a maximum flow rate through each other crop processing element of the parallel processing arrangement to a non-zero maximum flow rate. In particular, each other crop processing element of the parallel processing arrangement may be effectively treated as a downstream processing arrangement.

This approach helps reduce a risk and/or amount of crop build up and/or blockage in the crop processing arrangement.

In preferred examples, the maximum flow rate through each other crop processing element of the parallel processing arrangement is reduced (to a non-zero maximum flow rate). This approach helps reduce a (risk of) damage to the crop processing element(s) in the parallel processing arrangement.

By way of example, consider a scenario in which the parallel processing arrangement is a separator system comprising a plurality of rotatable elements, such as axial screw, driven by a same motor arrangement. If one of the axial screws becomes blocked, then continued driving by the motor arrangement may damage a bushing for the blocked axial screw. By reducing a maximum flow rate through the other (non-blocked) axial screws, e.g., by reducing a speed of rotation through the (non-blocked) axial screws, then a risk of damage to the blocked axial screw and driving components is significantly reduced.

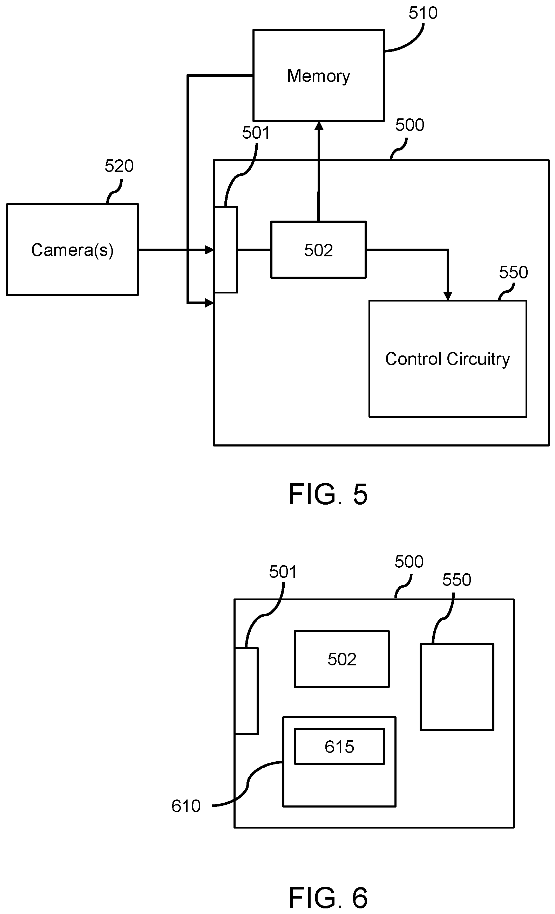

FIG. 5 illustrates a control system 500 according to an embodiment. The control system is configured to perform any herein described method 300 for each crop processing arrangement in a subset of a plurality of crop processing arrangements of a combine harvester

The control system 500 may thereby receive at least one flow rate measure responsive to a maximum flow rate of crop through the crop processing arrangement for current operating parameters of the crop processing arrangement. The first monocular image data may be captured using a sensor 520.

The control system may receive these values from a memory or storage unit 510 and/or from the sensor 520.

The control system 500 may comprise an input interface 501 configured to receive all of the above-identified data.

The control system 500 is configured to process the flow rate measure(s) to predict whether or not the crop processing arrangement is a flow-affected crop processing arrangement. Procedures for performing this method/process have been previously described. This process may be carried out by a processing system 502 of the control system 500.

The control system 500 is further configured to responsive to predicting that the crop processing arrangement is a flow-affected crop processing arrangement: reduce a maximum flow rate through each, if any, upstream crop processing arrangement, being any crop processing arrangement that is upstream, with respect to the crop flow, of the flow-affected crop processing arrangement; and control a maximum flow rate through each, if any, downstream crop processing arrangement to be greater than the maximum flow rate through each, if any, any upstream crop processing arrangement, wherein each downstream crop processing arrangement is any crop processing arrangement that is downstream, with respect to the crop flow, of the flow-affected crop processing arrangement.

The control system may control the maximum flow rate of each, if any, upstream and/or downstream crop processing arrangement using control circuitry 550. In particular, the control circuitry may be configured to control the operation or parameters of the combined harvester.

In some examples, any data produced by the control system, e.g., the prediction of whether or not the crop processing arrangement is a flow-affected crop processing arrangement, is stored in the memory 510 (e.g., together with a timestamp). This allows increase ease in identifying errors and/or occasions of flow-affected crop processing arrangements.

FIG. 6 illustrates an embodiment of the control system 500 described with reference to FIG. 5. The control system is able to carry out or perform one or more embodiments of an invention.

The control system 500 comprises an input interface 501 that receives communications from one or more inputting devices. Examples of suitable inputting devices include external memories, sensors and so on.

The control system 500 also comprises a processing system 502.

In one example, the processing system 502 may comprise an appropriately programmed or configured single-purpose processing device. Examples may include appropriately programmed field-programmable gate arrays or complex programmable logic devices.

As another example, the processing system may comprise a general purpose processing system (e.g. a general purpose processor or microprocessor) that executes a computer program 615 comprising code (e.g. instructions and/or software) carried by a memory 610 of the control system 500.

The memory 610 may be formed from any suitable volatile or non-volatile computer storage element, e.g. FLASH memory, RAM, DRAM, SRAM, EPROM, PROM, CD-ROM and so on. Suitable memory architectures and types are well known to the person skilled in the art.

The computer program 615, e.g. the software, carried by the memory 610 may include comprise a sequence of instructions that are executable by the processing system for implementing logical functions to carry out the desired method or procedure. Each instruction may represent a different logical function, step or sub-step used in performing a method or process according to an embodiment. The computer program may be formed from a set of subprograms, as would be known to the skilled person. The computer program 615 may be written in any suitable programming language that can be interpreted by the processing system 502 for executing the instructions. Suitable programming languages are well known to the skilled person.

Different components of the control system 500 may interact or communicate with one another via one or more intra-system communication systems (not shown), which may include communication buses, wired interconnects, analogue electronics, wireless communication channels (e.g. the internet) and so on. Such intra-system communication systems would be well known to the skilled person.

It is not essential for the control system 500 to be formed on a single device, e.g. a single computer. Rather, any of the system blocks (or parts of system blocks) of the illustrated control system may be distributed across one or more computers.

The skilled person would be readily capable of developing a control system for carrying out any herein described method. Thus, each step of the flow chart may represent a different action performed by a control system, and may be performed by a respective module of the control system.

It will be understood that disclosed methods are preferably computer-implemented methods. As such, there is also proposed the concept of a computer program comprising code means for implementing any described method when said program is run on a control system, such as a computer. Thus, different portions, lines or blocks of code of a computer program according to an embodiment may be executed by a control system or computer to perform any herein described method.

A computer program may be stored on a computer-readable medium, itself an embodiment of the invention. A "computer-readable medium" is any suitable mechanism or format that can store a program for later processing by a processing system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A control system for a combine harvester comprising a plurality of crop processing arrangements configured to sequentially process crop to define a crop flow through the combine harvester, the control system being configured to, for each crop processing arrangement in a subset of the plurality of crop processing arrangements:
receive at least one flow rate measure responsive to a maximum flow rate of crop through the crop processing arrangement for current operating parameters of the crop processing arrangement;
predict whether or not the crop processing arrangement is a flow-affected crop processing arrangement, being a crop processing arrangement in which the maximum flow rate of crop therethrough has reduced or has become negligible, by processing the at least one flow rate measure; and
responsive to predicting that the crop processing arrangement is a flow-affected crop processing arrangement:
reduce a maximum flow rate through each, if any, upstream crop processing arrangement, being any crop processing arrangement that is upstream, with respect to the crop flow, of the flow-affected crop processing arrangement; and
control a maximum flow rate through each, if any, downstream crop processing arrangement to be greater than the maximum flow rate through each, if any, upstream crop processing arrangement, wherein each downstream crop processing arrangement is any crop processing arrangement that is downstream, with respect to the crop flow, of the flow-affected crop processing arrangement.

2. The control system of claim 1, wherein, for each crop processing arrangement in the subset, each flow rate measure is a measure of an operational speed or rate of a component of the crop processing arrangement.

3. The control system of claim 1 or 2, wherein:
each crop processing arrangement in the subset comprises at least one rotatable element configured to rotate during processing of crop by the crop processing arrangement; and
for each crop processing arrangement in the subset, each flow rate measure is a measure of a rotation speed of a respective rotatable element of the crop processing arrangement.

4. The control system of any one of claims 1 to 3, wherein the control system is configured to, for each crop processing arrangement in the subset, predict whether or not the crop processing arrangement is a flow-affected crop processing arrangement by processing the at least one flow rate measure to predict whether or not the maximum flow rate of crop through the crop processing arrangement has become negligible.

5. The control system of any one of claims 1 to 4, wherein the control system is configured to, for each crop processing arrangement in the subset, responsive to predicting that the crop processing arrangement is a flow-affected crop processing arrangement, stop an operation of each, if any, upstream crop processing arrangement.

6. The control system of any one of claims 1 to 5, wherein the control system is configured to, for each crop processing arrangement in the subset and responsive to predicting that the crop processing arrangement is a flow-affected crop processing arrangement, maintain a maximum flow rate through each, if any, downstream crop processing arrangement.

7. The control system of any one of claims 1 to 6, wherein the control system is configured to, for each crop processing arrangement in the subset and responsive to predicting that the crop processing arrangement is a flow-affected crop processing arrangement:
for each, if any, downstream crop processing arrangement, stopping the operation of said downstream crop processing arrangement after a predetermined and non-zero period of time has elapsed.

8. The control system of any one of claims 1 to 7, wherein the control system is configured to, for each crop processing arrangement in the subset and responsive to predicting that the crop processing arrangement is a flow-affected crop processing arrangement, reduce a travel speed of the combine harvester.

9. The control system of any one of claims 1 to 8, wherein, for each crop processing arrangement in the subset, the control system is configured to predict whether or not the crop processing arrangement is a flow-affected crop processing arrangement by comparing one or more flow rate measures for the crop processing arrangement to a respective set of one or more thresholds.

10. The control system of any one of claims 1 to 9, wherein, for each crop processing arrangement in the subset, the control system is configured to predict whether or not the crop processing arrangement is a flow-affected crop processing arrangement by performing a process that comprises identifying whether or not there are any step changes in each flow rate measure.

11. The control system of any of claims 1 to 10, wherein:
at least one crop processing arrangement in the subset is a parallel processing arrangement that comprises a plurality of crop processing elements configured to process crop in parallel to one another; and
for each parallel processing arrangement, the at least one flow rate measure comprises, for each crop processing element, an element flow rate measure responsive to a maximum flow rate of crop through the crop processing element for current operating parameters of the crop processing element.

12. The control system of claim 11, wherein, for each parallel processing arrangement, the control system is configured to predict whether or not the crop processing arrangement is a flow-affected crop processing arrangement by performing a process that comprises comparing each element flow rate measure to one another.

13. The control system of any of claims 11 or 12, wherein, for each parallel processing arrangement, the control system is configured to, for each crop processing element:
predict whether or not the maximum flow rate of crop through the crop processing element has reduced or has become negligible by processing the element flow rate measure; and
responsive to predicting that the flow of crop through the crop processing element has reduced or has become negligible, maintain or reduce a maximum flow rate through each other crop processing element of the parallel processing arrangement to a non-zero maximum flow rate.

14. A computer-implemented method for a combine harvester comprising a plurality of crop processing arrangements configured to sequentially process crop to define a crop flow through the combine harvester, the computer-implemented method comprising, for each crop processing arrangement in a subset of the plurality of crop processing arrangements:
receiving at least one flow rate measure responsive to a maximum flow rate of crop through the crop processing arrangement for current operating parameters of the crop processing arrangement;
predicting whether or not the crop processing arrangement is a flow-affected crop processing arrangement, being a crop processing arrangement in which the maximum flow rate of crop therethrough has reduced or has become negligible, by processing the at least one flow rate measure; and
responsive to predicting that the crop processing arrangement is a flow-affected crop processing arrangement:
reducing a maximum flow rate through each, if any, upstream crop processing arrangement, being any crop processing arrangement that is upstream, with respect to the crop flow, of the flow-affected crop processing arrangement; and
controlling a maximum flow rate through each, if any, downstream crop processing arrangement to be greater than the maximum flow rate through each, if any, any upstream crop processing arrangement, wherein each downstream crop processing arrangement is any crop processing arrangement that is downstream, with respect to the crop flow, of the flow-affected crop processing arrangement.

15. A computer program product comprising computer program code means which, when executed on a control system, cause the control system to perform all of the steps of the computer-implemented method according to claim 14.
